# EUROPÄISCHE PATENTSCHRIFT

(11) **EP 2 605 923 B1**
(45) Veröffentlichungstag und Bekanntmachung des Hinweises auf die Patenterteilung: **30.04.2014**
(21) Anmeldenummer: 11727664.2
(22) Anmeldetag: 01.06.2011
(51) Int. Cl.: F16F 9/02, B60G 11/28, B60G 15/14, F16F 9/05, F16F 9/36

(54) **LUFTFEDERBEIN MIT ELASTISCHER KOLBENLAGERUNG**
AIR STRUT WITH ELASTIC PISTON MOUNTING
JAMBE DE FORCE A RESSORT PNEUMATIQUE AVEC LE MONTAGE SOUPLE DU PISTON

(30) Priorität: 20.08.2010 DE 102010037096
(43) Veröffentlichungstag der Anmeldung: 26.06.2013
(73) Patentinhaber: Continental Teves AG & Co. oHG, 60488 Frankfurt (DE)
(72) Erfinder: EIKE, Thomas, 30159 Hannover (DE); GLEU, Jens, Uwe, 30855 Langenhagen (DE); NESSEL, Andreas, 30916 Isernhagen (DE); ROSNER, Dirk, 30826 Garbsen (DE); OLDENETTEL, Holger, 30900 Wedemark (DE)
(86) Internationale Anmeldenummer: PCT/EP2011/059123
(87) Internationale Veröffentlichungsnummer: WO 2012/022509

(56) Entgegenhaltungen:
- DE-A1-102004 020 797
- DE-B4- 19 908 607
- DE-C1- 10 009 912
- DE-C1- 19 508 980
- US-B1- 6 443 436

## Beschreibung

Die Erfindung betrifft ein Luftfederbein, also eine Luftfeder-Dämpfer-Anordnung für ein Fahrzeug mit einer von einem Luftfederbalg aus elastomerem Material mindestens teilweise umschlossenen Arbeitskammer und mit einem zentrisch und mindestens teilweise innerhalb der Arbeitskammer angeordnetem teleskopierbaren Dämpfer, der ein als Dämpferzylinder ausgebildetes Gehäuse mit einem innenliegenden Dämpfungskolben und eine an den Dämpfungskolben angebundene Kolbenstange aufweist, wobei der Luftfederbalg an seinem einen Ende am Luftfederdeckel und an seinem anderen Ende unter Bildung einer Rollfalte an einem mit dem Dämpferzylinder verbundenen Luftfederkolben befestigt ist und auf dessen Außenseite abrollen kann

Der Luftfederdeckel und die Kolbenstange einerseits sind üblicherweise über ein gemeinsames Befestigungssystem mit der Karosserie verbunden, während der Dämpferzylinder andererseits mit dem Fahrwerk, d.h. der ungefederten Masse verbunden ist.

Federbeine mit Luftfedern dienen heute insbesondere in Personenkraftwagen als besonders komfortable Federungselemente und sorgen für ein angenehmes Fahrgefühl bei einer Federung, die je nach Straßenverhältnissen zwischen einem "weichen" und "harten" Federungsverhalten angepasst werden kann. Ein Luftfedersystem oder Niveauregelsystem besteht dabei aus den die Luftfeder- und Dämpfereinheiten umfassenden Luftfederbeinen für jedes Rad oder mindestens für jede Achse, aus der Luftversorgungsanlage mit einem Verdichter, einem Speicher, einem regenerierbaren Trockner, sowie aus weiteren schaltbaren oder festeingestellten pneumatischen Steuerelementen und weist dazu in aller Regel eine elektronische Steuerung auf

Die Luftfederbeine im Stand der Technik sind bekanntermaßen empfindlich gegenüber Bewegungen oder Auslenkungen, die durch Querkräfte verursacht werden, d.h. durch Fahrwerkskräften normal zur Achse der Luftfedern.

Insbesondere bei längeren Luftfederbeinen führen einwirkende Querkräfte zu einer sehr geringen, aber doch messbaren Knickbewegung, bei der Stoßdämpfer und Abrollkolben bzw. Rollbalg gegeneinander verschwenkt werden. Wird hier keine Vorsorge zur Kompensation solcher Knickbewegungen getroffen oder werden keine entsprechenden Führungen vorgesehen, so kann es durch solche Bewegungen und Kräfte innerhalb der Bauteile des Luftfederbeins zu erhöhten reibenden Kontakten und damit zu größerem Verschleiß kommen. Die Konstruktion der Luftfederbeine muss daher so ausgelegt werden, dass solche Bewegungen ausgeglichen werden können, ohne dass Querkräfte im Federbein Reibverschleiß an den Bauteile des Federbeins erzeugen.

Im Stand der Technik sind hierzu bereits Lösungen offenbart worden, beispielsweise durch die DE 195 08 980 C1. Bei dem dort gezeigten Luftfederbein weist das Gehäuse, d.h. der Dämpferzylinder des Stoßdämpfers einen angeschweißten Kragen auf, an dem der mit einem entsprechenden Flansch versehene Abrollkolben über ein anvulkanisiertes Ringteil aus elastomerem Material angebunden ist. Der elastische Ring ermöglicht eine gewisse Taumelbeweglichkeit des Luftfederkolbens zum Dämpferzylinder, ohne jedoch die Gefahr von erhöhtem Reibverschleiß durch Knickbewegungen in dem gewünschten Maße zu mindern.

Die DE 199 08 607 B4 offenbart ein Luftfederbein der gattungsgemäßen Art, bei dem der Luftfederdeckel eine konzentrische innere Führungshülse aufweist, die mit einem am balgseitigen Ende des Luftfederkolbens angeordneten Führungsring zusammenwirkt, um Querkräfte abzustützen. Das Reduzieren bzw. das Auffangen von Knickbewegungen wird hier allerdings durch eine erhöhte Anzahl von Bauteilen erkauft.

Als zusätzlicher Effekt ergeben sich bei den gattungsgemäßen Luftfederbeinen im Stand der Technik je nach Abmessungen bzw. Massen des Systems gerade durch die Einwirkung von Querkräften Schwingungen und Eigenfrequenzen, die nicht nur akustisch als störend empfunden werden, sondern die sich auch auf den Fahrkomfort negativ auswirken können.

Für die Erfindung bestand also die Aufgabe, ein Luftfederbein bereitzustellen, welches auch Querkräfte problemlos aufnehmen kann und somit radführende Eigenschaften besitzt, welches durch eine einfache Bauweise kostengünstig herzustellen ist und welches die Übertragung von durch Einwirkung von Querkräften entstehenden Schwingungen oder Eigenfrequenzen bzw. die Übertragung von Abrollgeräuschen ins Fahrzeuginnere reduziert.

Gelöst wird diese Aufgabe durch die Merkmale des Hauptanspruchs. Weitere vorteilhafte Ausbildungen sind in den Unteransprüchen offenbart.

Dabei ist der Luftfederkolben an seinem oberen Ende und oberhalb der Rollfalte durch ein elastisches Lager mit dem Dämpferzylinder verbunden. Das elastische Lager besteht aus einem elastomeren Körper, der zwischen einem am Dämpferzylinder befindlichen axial nach außen ragenden Kragen und einem am Luftfederkolben angeordneten axial nach innen ragenden Flansch vorgesehen ist. Zusätzlich ist der am Dämpferzylinder befindliche Kragen unterhalb des kolbenstangenseitigen Endes des Dämpferzylinders angeordnet.

Durch eine solche funktionale und geometrische Ausbildung der Anbindung von Dämpferzylinder und Luftfederkolben, insbesondere dadurch, dass das elastische Element im oberen Bereich des Kolbens - insbesondere oberhalb der Rollfalte - angeordnet ist, wird der Drehpunkt, um den der Kolben kippen kann, über den Angriffspunkt der Luftfederkraft verschoben, d.h. über den Angriffspunkt der auf den Luftfederkolben wirkenden und aus dem Druck im Arbeitsraum resultierenden Kräfte. Damit ergibt sich aufgrund des entstehenden geringen Hebelarmes zwischen Drehpunkt und dem Angriffspunkt der Luftfederkraft eine Anordnung, die unter allen Betriebsbedingungen und auch für kompakte Kolben gegen Ausknicken stabil ist, also Knickbewegungen nur einem akzeptabel geringen Rahmen zulässt. Bei der hier vorliegenden konstruktiven Umsetzung wird der Kolben im oberen Bereich verlängert und stützt sich in diesem Bereich auf dem Gummilager ab, ist aber insgesamt unterhalb des kolbenstangenseitigen Endes des Dämpferzylinders an letzterem angebunden. Dadurch können auch die Vorteile der elastischen Lagerung zur akustischen Isolierung, genutzt werden, ohne dass die kompakte Bauform des Kolbens aufgegeben werden muss.

Eine vorteilhafte Weiterbildung besteht darin, dass der am Dämpferzylinder befindliche Kragen auf den Dämpferzylinder aufgeschweißt oder luftdicht aufgepresst ist. Solche einfachen Herstell- und Verbindungsverfahren sind sehr kostengünstig und hier ohne Weiteres ausreichend. Der am Luftfederkolben angeordnete Flansch kann leicht durch anbördeln oder anrollen hergestellt werden.

Eine weitere vorteilhafte Ausbildung besteht darin, dass der elastomere Körper als im Wesentlichen ringförmiger Hohlkegelabschnitt und die anliegenden Flansch- und Kragenflächen komplementär dazu ausgebildet sind. Dadurch ergibt sich eine gleichermaßen sichere Kraftübertragung in axialer und radialer Richtung des Luftfederbeins/Dämpfers, sodass damit zwei Funktionen in einem Lagerbauteil realisiert werden.

Eine weitere vorteilhafte, weil im Hinblick auf das Material sehr einfache Ausbildung besteht darin, dass der elastomere Körper aus Gummi besteht. Gummielemente können zudem durch unterschiedliche Mischungen und durch die Zugabe von Verstärkungslagen oder Fasern aus den unterschiedlichsten Materialien beliebig in ihrer Festigkeit und Federeigenschaft eingestellt werden.

Eine weitere vorteilhafte Ausbildung besteht darin, dass der elastomere Körper mit dem Flansch und/oder mit dem Kragen durch Vulkanisation verbunden ist. Damit ergibt sich eine sehr einfache und überaus sichere Verbindung zwischen den aus Metall oder Kunststoff bestehenden Kragen- und Flanschteilen und einem Gummikörper/Elastomerkörper.

Eine weitere vorteilhafte Ausbildung besteht darin, dass der elastomere Körper durch eine formschlüssige Nut-Feder-Verbindung an den Flansch und/oder den Kragen angeschlossen ist. Dies kann sowohl als zusätzliche als auch als ausschließlich Maßnahme der Befestigung dienen. So kann z. B. das Gummilager als separates Teil hergestellt und dann mit Abrollkolben und Dämpfer, d.h. Flansch und den Kragen verbaut werden. Durch Hinterschnitte im Abrollkolben bzw. Flansch oder am Dämpferzylinder bzw. Kragen kann das Gummilager z. B. eingeknöpft werden, so dass eine Transportsicherung bzw. eine Sicherung gegen Abziehen entsteht.

Eine weitere vorteilhafte Ausbildung besteht darin, dass der Luftfederkolben an seinem unteren Ende durch einen weiteren elastomeren Körper am Dämpferzylinder abgestützt ist. So kann je nach Kraftangriffspunkten auch ein direktes Auffangen von Querkräften oder etwa eine geeignete Aufteilung bezüglich der Aufnahme von Anteilen der auf das Luftfederbein wirkenden Axial- und Querkräfte zwischen oberer Verbindung und unterer Abstützung erfolgen. Dies kann z.B. bei der Aufnahme von Lenkkräften wichtig sein.

Eine weitere vorteilhafte Ausbildung besteht darin, dass im Bereich der am oberen Ende des Luftfederkolbens ausgebildeten Verbindung zwischen Luftfederkolben und Dämpferzylinder eine Dichtung angeordnet ist. So kann die Abdichtung zwischen Abrollkolben und Dämpferzylinder auch durch das Gummilager selbst übernommen werden, wobei z. B. ringförmig umlaufende Kanten auf der Oberfläche von Abrollkolben/Flansch oder Dämpferzylinder / Kragen oder auf dem elastomeren Körper aufgebracht werden.

Eine weitere in gleicher Weise vorteilhafte Ausbildung besteht darin, dass im Bereich des weiteren elastomeren Körpers am unteren Ende des Luftfederkolbens eine Dichtung angeordnet ist. Bei einer solchen Ausführung lässt sich auch eine geeignete Aufteilung bezüglich der Aufnahme Kräften und der Bereitstellung der Dichtfunktion zwischen oberer Verbindung und unterer Abstützung erreichen.

Eine weitere vorteilhafte Ausbildung besteht darin, dass der zwischen Kragen des Dämpferzylinders und Flansch des Luftfederkolbens angeordnete elastomere Körper als Segmentring ausgebildet ist. So können etwa drei im Winkelabstand von 120° angeordnete Segmente, also eigentlich drei "einzelne" und ggf. über einen Ringflansch miteinander verbundene elastomere Körper in Form von Hohlkegelausschnitten ausreichen, um Quer und Längskräfte bei leichteren Fahrzeugen aufzufangen. Dadurch werden auch bei leichtester Bauweise die gewünschten Funktionen bereitgestellt.

Anhand eines Ausführungsbeispiels soll die Erfindung näher erläutert werden. Es zeigen
- Fig. 1: ein erfindungsgemäßes Luftfederbein für einen Personenkraftwagen
- Fig. 2: ausschnittsweise eine weitere Ausführung eines erfindungsgemäßes Luftfederbeins für einen Personenkraftwagen

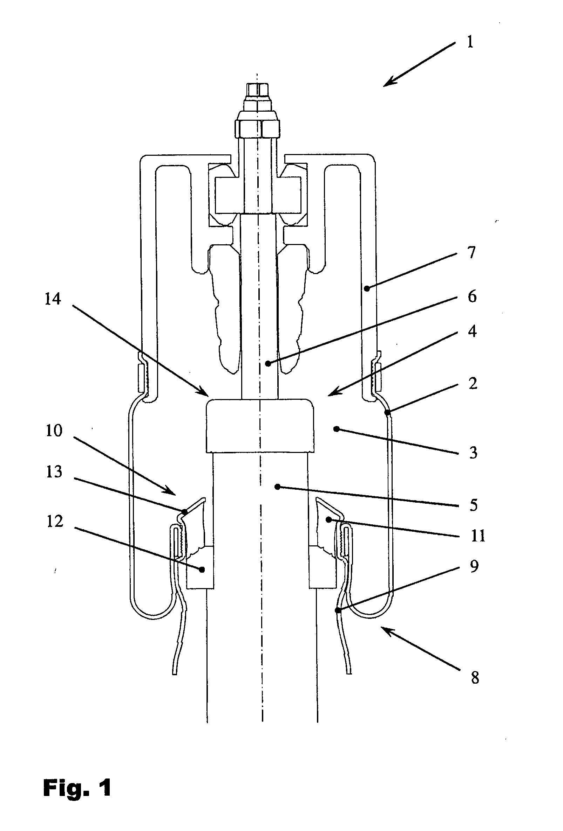

Die Fig. 1 zeigt ein Luftfederbein 1 für einen Personenkraftwagen. Der Luftfederbalg 2 besteht aus mit Festigkeitsträgern verstärktem Gummi und umschließt die Arbeitskammer 3. Ebenfalls zentrisch innerhalb der Arbeitskammer ist der teleskopierbare Dämpfer 4 angeordnet, der ein als Dämpferzylinder 5 ausgebildetes Gehäuse mit einem hier nicht näher dargestellten innenliegenden Dämpfungskolben und eine an den Dämpfungskolben angebundene Kolbenstange 6 aufweist.

Der Luftfederbalg 2 ist an seinem einen oberen Ende am Luftfederdeckel 7 und an seinem anderen unteren Ende unter Bildung einer Rollfalte 8 an einem mit dem Dämpferzylinder 5 verbundenen Luftfederkolben 9 befestigt, auf dessen Außenseite der Luftfederbalg abrollen kann.

Der Luftfederkolben 9 ist an seinem oberen Ende und oberhalb der Rollfalte 8 durch ein elastisches Lager 10 mit dem Dämpferzylinder 5 verbunden.

Das elastische Lager 10 besteht aus einem elastomeren Körper 11, hier einem Gummikörper, der zwischen einem am Dämpferzylinder 5 befindlichen axial nach außen ragenden Kragen 12 und einem am Luftfederkolben 9 angeordneten axial nach innen ragenden Flansch 13 vorgesehen ist.

Der am Dämpferzylinder befindliche Kragen 12 ist unterhalb des kolbenstangenseitigen Endes 14 des Dämpferzylinders 5 angeordnet. Der am Dämpferzylinder 5 befindliche Kragen 12 ist auf einen umlaufenden Absatz des Dämpferzylinders aufgesetzt und danach verschweißt worden.

Der elastomere Körper/ Gummikörper 11 ist als ringförmiger Hohlkegelabschnitt größerer Dicke ausgebildet. Die anliegenden Flansch- und Kragenflächen des nach außen ragenden Kragen 12 und des nach innen ragenden Flansch 13 sind komplementär dazu ausgebildet und anvulkanisiert.

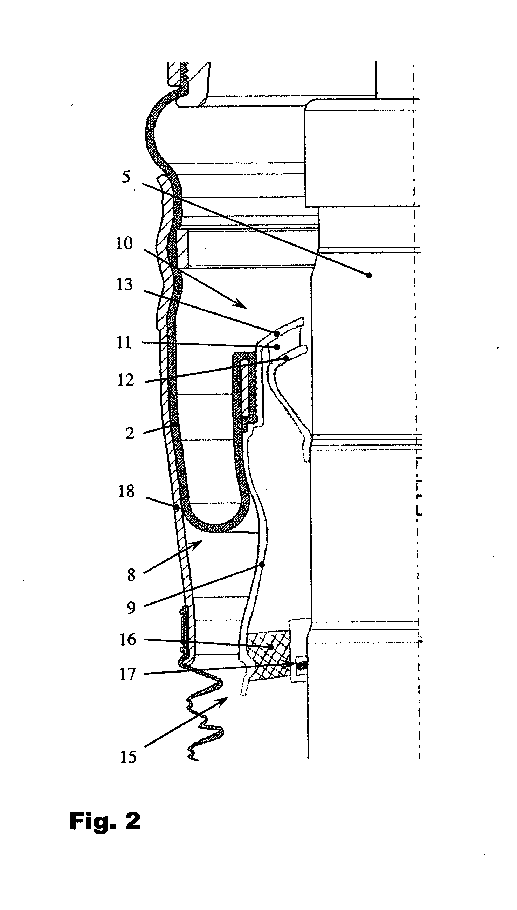

Fig. 2 zeigt einen mittleren Ausschnitt links der Mittellinie einer anderen Ausführungsform eines erfindungsgemäßen Luftfederbeins für einen Personenkraftwagen, bei dem der Luftfederkolben 9 an seinem unteren Ende 15 durch einen weiteren elastomeren Körper 16 aus Gummi am Dämpferzylinder 5 abgestützt ist. Im Bereich des Gummikörpers 16 ist am unteren Ende 15 des Luftfederkolbens eine Dichtung 17 angeordnet. Der Luftfederbalg 2 ist hier mit einer Außenführung 18 abgestützt.

### Bezugszeichenliste

### (Teil der Beschreibung)

- 1: Luftfederbein
- 2: Luftfederbalg
- 3: Arbeitskammer
- 4: Dämpfer
- 5: Dämpferzylinder
- 6: Kolbenstange
- 7: Luftfederdeckel
- 8: Rollfalte
- 9: Luftfederkolben
- 10: Elastisches Lager
- 11: Elastomerer Körper / Gummikörper
- 12: Kragen
- 13: Flansch
- 14: Kolbenstangenseitiges Ende
- 15: Unteres Ende des Luftfederkolbens 9
- 16: Gummikörper
- 17: Dichtung
- 18: Außenführung

## Patentansprüche

1. Luftfederbein (1) für ein Fahrzeug mit einer von einem Luftfederbalg (2) aus elastomerem Material mindestens teilweise umschlossenen Arbeitskammer (3) und mit einem zentrisch und mindestens teilweise innerhalb der Arbeitskammer (3) angeordnetem teleskopierbaren Dämpfer (4), der ein als Dämpferzylinder (5) ausgebildetes Gehäuse mit einem innenliegenden Dämpfungskolben und eine an den Dämpfungskolben angebundene Kolbenstange (6) aufweist, wobei der Luftfederbalg (2) an seinem einen Ende am Luftfederdeckel (7) und an seinem anderen Ende unter Bildung einer Rollfalte (8) an einem mit dem Dämpferzylinder (5) verbundenen Luftfederkolben (9) befestigt ist und auf dessen Außenseite abrollen kann, **dadurch gekennzeichnet, dass**
- der Luftfederkolben (9) an seinem oberen Ende und oberhalb der Rollfalte (8) durch ein elastisches Lager (10) mit dem Dämpferzylinder verbunden ist,
- das elastische Lager (10) aus einem elastomeren Körper (11) besteht, der zwischen einem am Dämpferzylinder (5) befindlichen axial nach außen ragenden Kragen (12) und einem am Luftfederkolben (9) angeordneten axial nach innen ragenden Flansch (13) vorgesehen ist,
- der am Dämpferzylinder (5) befindliche Kragen (12) unterhalb des kolbenstangenseitigen Endes (14) des Dämpferzylinders (5) angeordnet ist.

2. Luftfederbein nach Anspruch 1, bei dem der am Dämpferzylinder (5) befindliche Kragen (12) auf den Dämpferzylinder aufgeschweißt oder luftdicht aufgepresst ist.

3. Luftfederbein nach Anspruch 1 oder 2, bei dem der elastomere Körper (11) als im Wesentlichen ringförmiger Hohlkegelabschnitt und die anliegenden Flansch- und Kragenflächen komplementär dazu ausgebildet sind.

4. Luftfederbein nach einem der Ansprüche 1 bis 3, bei dem der elastomere Körper (11) aus Gummi besteht.

5. Luftfederbein nach Anspruch 5, bei dem der elastomere Körper (11) mit dem Flansch (13) und/oder mit dem Kragen (12) durch Vulkanisation verbunden ist.

6. Luftfederbein nach einem der Ansprüche 1 bis 5, bei dem der elastomere Körper (11) durch eine formschlüssige Nut-Feder-Verbindung an den Flansch und/oder den Kragen angeschlossen ist.

7. Luftfederbein nach einem der Ansprüche 1 bis 6, bei dem der Luftfederkolben (9) an seinem unteren Ende (15) durch einen weiteren elastomeren Körper (16) am Dämpferzylinder (5) abgestützt ist.

8. Luftfederbein nach einem der Ansprüche 1 bis 7, bei dem im Bereich der am oberen Ende des Luftfederkolbens (9) ausgebildeten Verbindung zwischen Luftfederkolben und Dämpferzylinder eine Dichtung angeordnet ist.

9. Luftfederbein nach Anspruch 7, bei dem im Bereich des weiteren elastomeren Körpers (16) am unteren Ende (15) des Luftfederkolbens (9) eine Dichtung (17) angeordnet ist.

10. Luftfederbein nach einem der Ansprüche 1 bis 9, bei dem der zwischen Kragen (12) des Dämpferzylinders (5) und Flansch (13) des Luftfederkolbens (9) angeordnete elastomere Körper (11) als Segmentring ausgebildet ist.

## Claims

1. Pneumatic spring strut (1) for a vehicle, having a working chamber (3) which is at least partially enclosed by a pneumatic spring bellows (2) composed of elastomeric material and having a telescopic damper (4) which is arranged centrally and at least partially within the working chamber (3), said damper comprising a housing, which is formed as a damper cylinder (5) and which has a damping piston situated at the inside, and comprising a piston rod (6) which is connected to the damping piston, wherein the pneumatic spring bellows (2) is fastened at one end thereof to the pneumatic spring cover (7) and is fastened at the other end thereof, so as to form a roll fold (8), to a pneumatic spring piston (9) connected to the damper cylinder (5) and can roll on the outer side of said pneumatic spring piston, **characterized in that**
- the pneumatic spring piston (9) is connected, at its top end and above the roll fold (8), to the damper cylinder by means of an elastic bearing (10),
- the elastic bearing (10) is composed of an elastomer body (11) which is provided between an axially outwardly projecting collar (12), which is situated on the damper cylinder (5), and an axially inwardly projecting flange (13), which is arranged on the pneumatic spring piston (9),
- the collar (12) situated on the damper cylinder (5) is arranged below the piston-rod-side end (14) of the damper cylinder (5).

2. Pneumatic spring strut according to Claim 1, in which the collar (12) situated on the damper cylinder (5) is welded to or pressed in an air-tight manner onto the damper cylinder.

3. Pneumatic spring strut according to Claim 1 or 2, in which the elastomer body (11) is formed as a substantially annular hollow conical portion, and the abutting flange and collar surfaces are of a form complementary thereto.

4. Pneumatic spring strut according to one of Claims 1 to 3, in which the elastomer body (11) is composed of rubber.

5. Pneumatic spring strut according to Claim 5, in which the elastomer body (11) is connected to the flange (13) and/or to the collar (12) by vulcanization.

6. Pneumatic spring strut according to one of Claims 1 to 5, in which the elastomer body (11) is connected to the flange and/or to the collar by means of a positively locking tongue-and-groove connection.

7. Pneumatic spring strut according to one of Claims 1 to 6, in which the pneumatic spring strut (9), at its lower end (15), is supported on the damper cylinder (5) by a further elastomer body (16).

8. Pneumatic spring strut according to one of Claims 1 to 7, in which a seal is arranged in the region of the connection, formed at the upper end of the pneumatic spring piston (9), between the pneumatic spring piston and the damper cylinder.

9. Pneumatic spring strut according to Claim 7, in which a seal (17) is arranged in the region of the further elastomer body (16) at the lower end (15) of the pneumatic spring piston (9).

10. Pneumatic spring strut according to one of Claims 1 to 9, in which the elastomer body (11) arranged between the collar (12) of the damper cylinder (5) and the flange (13) of the pneumatic spring piston (9) is in the form of a segmented ring.

## Revendications

1. Jambe de force à ressort pneumatique (1) pour un véhicule comprenant une chambre de travail (3) au moins en partie entourée par un soufflet de ressort pneumatique (2) en matériau élastomère et un amortisseur (4) télescopable disposé centralement et au moins en partie à l'intérieur de la chambre de travail (3), lequel présente un boîtier réalisé sous forme de cylindre amortisseur (5) avec un piston d'amortissement situé à l'intérieur et une tige de piston (6) reliée au piston d'amortissement, le soufflet de ressort pneumatique (2) étant fixé à l'une de ses extrémités au chapeau de ressort pneumatique (7) et à son autre extrémité, en formant un pli roulant (8), à un piston de ressort pneumatique (9) connecté au cylindre amortisseur (5) et pouvant rouler sur son côté extérieur, **caractérisée en ce que**
- le piston de ressort pneumatique (9) est connecté au niveau de son extrémité supérieure et au-dessus du pli roulant (8) par un palier élastique (10) au cylindre amortisseur,
- le palier élastique (10) se compose d'un corps élastomère (11) qui est prévu entre un collet (12) saillant axialement vers l'extérieur et situé au niveau du cylindre amortisseur (5) et une bride (13) saillant axialement vers l'intérieur et disposée au niveau du piston de ressort pneumatique (9),
- le collet (12) situé au niveau du cylindre amortisseur (5) est disposé en dessous de l'extrémité (14) du côté de la tige de piston du cylindre amortisseur (5).

2. Jambe de force à ressort pneumatique selon la revendication 1, dans laquelle le collet (12) situé au niveau du cylindre amortisseur (5) est soudé sur le cylindre amortisseur ou est pressé sur celui-ci de manière étanche à l'air.

3. Jambe de force à ressort pneumatique selon la revendication 1 ou 2, dans laquelle le corps élastomère (11) est réalisé sous forme de portion conique creuse essentiellement annulaire et les faces de bride et de collet s'appliquant contre lui sont réalisées de manière complémentaire à celui-ci.

4. Jambe de force à ressort pneumatique selon l'une quelconque des revendications 1 à 3, dans laquelle le corps élastomère (11) se compose de caoutchouc.

5. Jambe de force à ressort pneumatique selon la revendication 5, dans laquelle le corps élastomère (11) est connecté à la bride (13) et/ou au collet (12) par vulcanisation.

6. Jambe de force à ressort pneumatique selon l'une quelconque des revendications 1 à 5, dans laquelle le corps élastomère (11) est raccordé à la bride et/ou au collet par une connexion à rainure et languette à engagement positif.

7. Jambe de force à ressort pneumatique selon l'une quelconque des revendications 1 à 6, dans laquelle le piston de ressort pneumatique (9) est supporté au niveau de son extrémité inférieure (15) par un corps élastomère supplémentaire (16) au niveau du cylindre amortisseur (5).

8. Jambe de force à ressort pneumatique selon l'une quelconque des revendications 1 à 7, dans laquelle un joint d'étanchéité est disposé dans la région de la connexion entre le piston de ressort pneumatique et le cylindre amortisseur réalisée au niveau de l'extrémité supérieure du piston de ressort pneumatique (9).

9. Jambe de force à ressort pneumatique selon la revendication 7, dans laquelle un joint d'étanchéité (17) est disposé dans la région du corps élastomère supplémentaire (16) au niveau de l'extrémité inférieure (15) du piston de ressort pneumatique (9).

10. Jambe de force à ressort pneumatique selon l'une quelconque des revendications 1 à 9, dans laquelle le corps élastomère (11) disposé entre le collet (12) du cylindre amortisseur (5) et la bride (13) du piston de ressort pneumatique (9) est réalisé sous forme d'anneau segmenté.
